# EUROPEAN PATENT APPLICATION

(11) **EP 1 355 230 A2**
(43) Date of publication of application: **22.10.2003**
(21) Application number: 03250531.5
(22) Date of filing: 29.01.2003
(51) Int. Cl.: G06F 7/54

(54) **Arithmetic processing unit and semiconductor device**

(30) Priority: 16.04.2002 JP 2002113952; 16.01.2003 JP 2003008501
(71) Applicant: Sony Computer Entertainment Inc., Tokyo 107-0052 (JP)
(72) Inventor: Wada, Shinya, c/o Sony Computer Entertainment Inc., Minato-ku, Tokyo 107-0052 (JP)
(74) Representative: Turner, James Arthur

(57) **Abstract**

To provide an arithmetic processing unit (10) for faster operations while reducing processing loads to ensure that arithmetic on computers guarantees correctness. It includes a data memory (12) in which floating point numbers are stored; an interval specifying section (13) adapted to retrieve two or more floating point numbers from the data memory (12) to specify an upper bound and a lower bound between which an exact value lies for each of the retrieved two or more floating point numbers; and an ALU (14) for performing a predetermined arithmetic operation using the upper bound and the lower bound that are specified by the interval specifying section for each of the two or more floating point numbers. Faster processing with lower loads can be achieved with guaranteed accuracy as compared with conventional equivalents that are achieved only on the basis of software operations.

## Description

This invention relates to arithmetic processing units and semiconductor devices.

Arithmetic operations performed on an information processing unit such as a computer are complicated with the advancement in processing power of information processing units and increasingly complex processing requirements. Computation using floating point numbers is often performed to produce more accurate results, even for complicated arithmetic operations. Floating point arithmetic can be expected to improve accuracy of processing by increasing the number of significant digits. The IEEE (Institute of Electrical and Electronics Engineers) has produced a standard for floating point arithmetic, called IEEE 754. To represent real numbers using the floating point notation, continuous numbers which are simply real numbers (which lie at the core of continuous mathematics) are converted to discrete floating point numbers. Thus, results have some errors.

More specifically, arithmetic processing units such as floating point units (FPUs) for computation using floating point numbers have limitations on the number of digits which the FPUs can process. If the real result is not exactly one of the representable floating-point numbers, the result is rounded to a floating point number. For example, the least significant digit of the floating point number is either "rounded down", "rounded up", or "rounded off", which causes the result to be inexact. Rounding error is the error which is produced when replacing a real number with its floating point representation. Arithmetic using floating point numbers produces results having some errors.

Hardware products such as conventional arithmetic processing units are hardly adapted to arithmetic operations which take into account the rounding errors (calculation with guaranteed accuracy). Thus, a software tool is needed that reliably guarantees the accuracy of results and determines over what range a true solution exists in order to produce mathematically-correct results in continuous mathematics. Alternatively, results may be considered approximate and empirically determine that the true solution would be found among or around the operation results.

An approach designated "numerical calculation with guaranteed accuracy" has been studied to give a truly mathematical meaning to the operation results while taking account of errors that are incurred in floating point operation. However, most hardware products do not take into account the numerical calculation with guaranteed accuracy, as described above. The inescapable conclusion to be drawn is that a software tool is used to guarantee accuracy. For this purpose, development of a software tool has involved expert knowledge and expertise as well as a time consuming, labor intensive process.

Guarantee of accuracy provided by software is based on the use of a pair of floating-point numbers in arithmetic processing units, one for the lower limit, and one for the upper limit. The set of all real numbers between and including the lower and upper limits is referred to as an interval. The intention is to evaluate real numbers to be computed (hereinafter, referred to as "exact values") over sets of numbers contained in intervals. The arithmetic on intervals is referred to as "interval arithmetic" and interval arithmetic based on floating point numbers is referred to as "machine interval arithmetic".

For example, to compute an exact value "0.001234" on an arithmetic processing unit that can process floating point numbers to the accuracy of three decimal places, an interval is specified by two floating point numbers, a lower bound "0.123 x 10⁻²" and an upper bound "0.124 x 10⁻²" between which the exact value "0.001234" must lie. This is interval arithmetic and, in particular, machine interval arithmetic since each interval is specified by two floating point numbers. The interval is specified so that it contains the exact value. More specifically, the exact value "0.001234" is represented by a floating point number "0.1234 x 10⁻²" and it is certified that the floating point number belongs to a specified interval. As used herein, the upper bound refers to a floating point number for the upper limit and the lower bound refers to a floating point number for the lower limit.

For addition or subtraction of two exact values using machine interval arithmetic, the exact values are each rounded to specify lower bounds. The lower bounds are subjected to addition or subtraction. Then, the exact values are again rounded to specify upper bounds, which are subsequently subjected to addition or subtraction. The operation uses a routine of "specifying lower bounds -> computation -> specifying upper bounds -> computation". For multiplication or division, the lower bounds are first subjected to multiplication or division, and the upper bounds are then subjected to multiplication or division. One upper bound and the other lower bound are then subjected to multiplication or division, following which the other upper bound and one lower bound are subjected to multiplication or division. Computed results are compared with each other to determine the maximum and minimum values.

Conventionally, the four internal arithmetic operations are combined to provide guaranteed results. This approach appears successful to a certain extent when a result is obtained using a finite number of combinations of the four rules. However, the same arithmetic operations should be performed with the upper bound and the lower bound replaced from each other, as described above. For addition or subtraction for example, the lower bounds are subjected to addition or subtraction before the upper bounds are subjected to addition or subtraction. Such complicated operations sacrifice computation speed. For multiplication or division, comparison further decreases the computation speed.

The present invention was made with respect to the above-mentioned problems, and embodiments thereof can provide an arithmetic approach for faster operations while reducing processing loads to ensure that arithmetic on computers guarantees correctness.

Embodiments of the present invention relate to fast processing with guaranteed or at least improved accuracy while taking account of errors that are incurred in floating point operations.

Various respective aspects and features of the invention are defined in the appended claims. Features from the dependent claims may be combined with features of the independent claims as appropriate and not merely as explicitly set out in the claims. An arithmetic processing unit according to the present invention that solves or at least alleviates the above-mentioned problems comprises data storage means in which a plurality of floating point numbers are stored; interval specifying means adapted to retrieve two or more floating point numbers from the data storage means to specify an upper bound and a lower bound between which an exact value lies for each of the retrieved two or more floating point numbers; and arithmetic operation means for performing a predetermined arithmetic operation using the upper bound and the lower bound that are specified by the interval specifying means for each of the two or more floating point numbers. The data storage means, the interval specifying means, and the arithmetic operation means 14are achieved by hardware implementations.

In a preferred embodiment this arithmetic processing unit comprises a purpose-built hardware tool (e.g interval specifying means (13) described below) that specifies an interval and another purpose-built hardware tool for interval arithmetic (e.g arithmetic operation means (14)). Thus, faster processing can be achieved with guaranteed accuracy as compared with conventional equivalents that are achieved only on the basis of software operations.

The term "hardware tool" as used herein includes firmware tools which are hardware tools of which operation procedures are previously programmed.

The arithmetic processing unit may further comprise operation result selecting means that compares operation results obtained by the arithmetic operation means and selects an operation result that satisfies a predetermined condition and writes the selected operation result in the data storage means. The operation result selecting means may be configured to select, for example, an operation result with the highest value and an operation result with the lowest value. The operation result selecting means allows specification of a range including an exact value which is represented by a floating point number.

The arithmetic operation means in the above-mentioned arithmetic processing unit may be configured in the following way depending on details of arithmetic operations.
(1) It may be adapted to sum two upper bounds and sum two lower bounds when two floating point numbers are added to each other, the two upper bounds and the two lower bounds being obtained from corresponding two floating point numbers.
(2) It may be adapted to subtract the lower bound obtained from the one floating point number from the upper bound obtained from the other floating point and subtract the upper bound obtained from the one floating point number from the lower bound obtained from the other floating point number, when one floating point number is subtracted from the other floating point number.
(3) It may be adapted to do multiplication or division using one upper bound and the other upper bound and adapted to do multiplication or division using one lower bound and the other lower bound, the upper bound and the lower bound being obtained from the two floating point numbers, and adapted to do multiplication or division using the upper bound obtained from the one floating point number and the lower bound obtained from the other floating point number, and adapted to do multiplication or division using the lower bound obtained from the one floating point number and the upper bound obtained from the other floating point number, when two floating point number are multiplied or divided. In such a case, the operation result selecting means may be configured to select a multiplication result with the highest value and a multiplication result with the lowest value, or a division result with the highest value and a division result with the lowest value, out of four multiplication results or four division results obtained by the arithmetic operation means.

Another arithmetic processing unit according to the present invention comprises instruction storage means in which an instruction for directing a predetermined arithmetic operation is stored; data storage means in which a plurality of floating point numbers are stored; interval specifying means adapted to retrieve the instruction from the instruction storage means and retrieve two or more floating point numbers from the data storage means according to the instruction and specify an upper bound and a lower bound between which an exact value lies for each of the retrieved two or more floating point numbers; arithmetic operation means adapted to retrieve the instruction from the instruction storage means and retrieve two or more upper bounds and two or more lower bounds that are specified by the interval specifying means according to the instruction, the arithmetic operation means being for performing the predetermined arithmetic operation designated by the retrieved predetermined instruction, using the retrieved two or more upper bounds and the retrieved two or more lower bounds; and operation result selecting means for selecting an operation result that satisfies a predetermined condition from the operation results obtained as a result of operations by the arithmetic operation means to write the selected operation result in the data storage means. As in the above-mentioned arithmetic processing unit, the instruction storage means, the data storage means, the interval specifying means (13), and the arithmetic operation means are achieved by hardware implementations.

The instruction includes, for example, information indicating floating point numbers to be used for arithmetic operations, type (e.g., addition, subtraction) of operations and information associated with operation procedures.

In this arithmetic processing unit, the arithmetic operation means may be, for example, adapted to sum the upper bounds for the two floating point numbers and sum the lower bounds for the two floating point numbers, when the number of the floating point numbers that are retrieved by the interval specifying means is equal to two and when the instruction is for directing addition. In such a case, the operation result selecting means is configured to write, for example, two operation results obtained by the arithmetic operation means in the data storage means.

The arithmetic operation means may be adapted to, for example, subtract the lower bound obtained from one floating point number from the upper bound obtained from the other floating point and subtract the upper bound obtained from the one floating point number from the lower bound obtained from the other floating point number, when the number of the floating point numbers retrieved by the interval specifying means is equal to two and when the predetermined instruction is for directing subtraction of one floating point number from the other. The operation result selecting means may be configured to write, for example, two operation results obtained by the arithmetic operation means in the data storage means.

In addition, the arithmetic operation means may be, for example, adapted to do multiplication or division using one upper bound and the other upper bound and adapted to do multiplication or division using one lower bound and the other lower bound, the upper bound and the lower bound being obtained from the two floating point numbers, and adapted to do multiplication or division using the upper bound obtained from the one floating point number and the lower bound obtained from the other floating point number, and adapted to do multiplication or division using the upper bound obtained from the other floating point number and the lower bound obtained from the one floating point number, when the number of the floating point numbers retrieved by said interval specifying means is equal to two and when the predetermined instruction is for directing multiplication or division. The operation result selecting means may be configured to write, for example, in the data storage means, a multiplication result with the highest value and a multiplication result with the lowest value, or a division result with the highest value and a division result with the lowest value, out of four multiplication results or four division results obtained by the arithmetic operation means.

In each of the above-mentioned arithmetic processing units, the floating point numbers stored in the data storage means are obtained after rounding an exact value. Thus, the interval specifying means may specify, for example, an interval that includes the exact value by means of adding or subtracting one to or from the least significant digit of the mantissa of floating point numbers. The arithmetic operation means may perform interval arithmetic operations on the thus-obtained interval including the exact value while taking account of errors that are incurred in floating point operations.

Another arithmetic processing unit according to the present invention comprises data storage means in which a plurality of numerical values with errors are stored; interval specifying means adapted to retrieve two or more numerical values with errors from the data storage means to specify an upper bound and a lower bound between which errors lie for each of the retrieved two or more numerical values with errors; and arithmetic operation means for performing a predetermined arithmetic operation using the upper bound and the lower bound for each of two or more numerical values with errors that are specified by the interval specifying means. The data storage means, the interval specifying means, and the arithmetic operation means are achieved by hardware implementations.

The present invention also provides a semiconductor device. More specifically the semiconductor device comprises an instruction memory in which an instruction for directing a predetermined arithmetic operation is stored; a data memory in which a plurality of floating point numbers are stored; an interval specifying section adapted to retrieve the instruction from the instruction memory and retrieve two or more floating point numbers from the data memory according to the instruction and specify an upper bound and a lower bound between which an exact value lies for each of the retrieved two or more floating point numbers; arithmetic operation section adapted to retrieve the instruction from the instruction memory and retrieve two or more upper bounds and two or more lower bounds that are specified by the interval specifying section according to the instruction, the arithmetic operation section being for performing the predetermined arithmetic operation designated by the retrieved predetermined instruction, using the retrieved two or more upper bounds and the retrieved two or more lower bounds; and operation result selecting section for selecting an operation result with the highest value and an operation result with the lowest value, from the operation results obtained as a result of operations by the arithmetic operation section to write the selected operation result in the data memory.

The invention will now be described by way of example with reference to the accompanying drawings, throughout which like parts are referred to by like references, and in which:
Fig. 1 is a view showing an entire configuration of an information processing system to which the present invention is applied;
Fig. 2 is a view showing a specific configuration of an arithmetic processing unit according to an embodiment of the present invention;
Fig. 3 is a flow chart illustrating operations that are performed by the arithmetic processing unit according to the embodiment of the present invention;
Fig. 4 is a view which is used to explain a data flow during an addition operation;
Fig. 5 is a view which is used to explain a data flow during a subtraction operation;
Fig. 6 is a view which is used to explain a data flow during a multiplication operation; and
Fig. 7 is a view which is used to explain a data flow during a division operation.

An embodiment of the present invention is described with reference to the drawings.

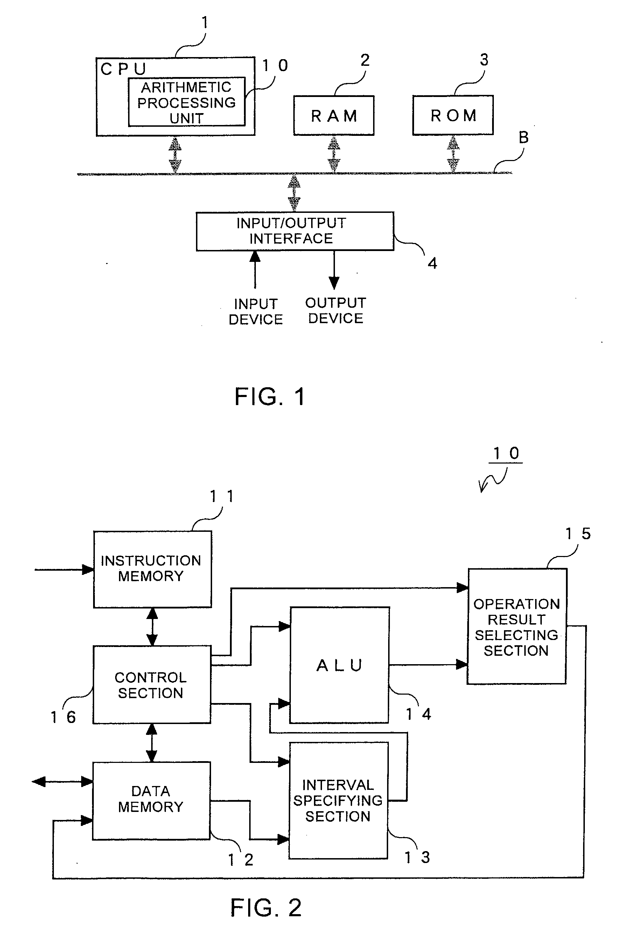

Fig. 1 is a view showing a hardware configuration of an information processing system on which an arithmetic processing unit of the present invention is mounted. The information processing system comprises a CPU (Central Processing Unit) 1, a RAM (Random Access Memory) 2, a ROM (Read Only Memory) 3 and an input/output interface 4, which are connected to each other through a bus B. The input/output interface 4 is connected to an input device (e.g., keyboard and mouse) and an output device (e.g., a display unit). The input/output interface 4 has the control over data input with the input device(s) from the outside of the information processing system and output of processing results to the output device(s).

The CPU 1 performs predetermined information processing using programs and data that are recorded on the RAM 2 and the ROM 3. The CPU 1 of this embodiment comprises an arithmetic processing unit 10 such as an FPU that is capable of performing operations using floating point numbers for information processing. Thus, when the information processing system is the one that is designed to process three-dimensional images, floating point arithmetic can be made on the CPU 1 to display fine images and render complex movement of objects of an image.

It should be noted that this embodiment is described for the case where the arithmetic processing unit 10 is included in the CPU 1, but the present invention is not limited to such an embodiment. The arithmetic processing unit 10 may be provided independently of the CPU 1.

A specific configuration of the arithmetic processing unit 10 is shown in Fig. 2.

As shown in Fig. 2, the arithmetic processing unit 10 according to this embodiment comprises an instruction memory 11, a data memory 12, an interval specifying section 13, an ALU (Arithmetic and Logical Unit) 14, an operation result selecting section 15, and a control section 16 which controls various operations of the components included in the arithmetic processing unit 10. A combination of these components is achieved as a purpose-built hardware tool for performing arithmetic operations of floating point numbers with guaranteed accuracy. For example, the combination may be achieved on a single semiconductor device.

The instruction memory 11 receives instructions for arithmetic operations from the outside of the arithmetic processing unit 10 and stores the instructions in it.

The instruction as used herein includes, for example, an addition instruction for summing two floating point numbers, a subtraction instruction for subtracting one floating point number from another floating point number, a multiplication instruction for multiplying one floating point number by another floating point number, and a division instruction for dividing one floating point number by another floating point number. Besides these arithmetic instructions, the instruction also includes information that is used to designate the floating point numbers to be used for an arithmetic operation.

The data memory 12 receives floating point numbers to be used for the subsequent arithmetic operations from the outside of the arithmetic processing unit 10 and stores them in it. The data memory 12 also stores operation results obtained by the arithmetic processing unit 10. The floating point number to be used for the arithmetic operations may be, for example, numerical values obtained by rounding (e.g., rounding off, rounding down, or rounding up) an exact value of a predetermined place and below.

The instruction memory 11 and the data memory 12 may be implemented in a physically same memory. Alternatively, the RAM 2 may be used as the instruction memory 11 and the data memory 12.

The interval specifying section 13 retrieves a floating point number to be used for arithmetic operations from the data memory 12. The interval specifying section 13 then specifies an upper bound and a lower bound of a range (interval) within which the exact value of the subject floating point number is guaranteed. For example, the interval specifying section 13 adds one to and subtracts one from the least significant digit of the mantissa of the floating point number to calculate the upper bound and the lower bound for the floating point number.

As described above, if the exact value is not one of the representable floating-point numbers, the value is rounded to a floating point number by replacing an exact value with its floating point representation so that the arithmetic processing unit 10 can process it. The floating point number does not necessarily represent the exact value itself. Thus, a predetermined range or interval is specified using a pair of floating point numbers so that the exact value must lie in the interval. In this embodiment, the floating point numbers are obtained by adding one to and subtracting one from the least significant digit of the original floating point number.

For example, it is assumed that the interval specifying section 13 retrieves a floating point number "0.123 x 10⁻²" from the data memory 12 and that the number has been rounded off, the exact value for this floating point number must lie in an interval between "0.1225 x 10⁻²" and "0.1234 x 10⁻²". Accordingly, the interval specifying section 13 subtracts "0.001" from "0.123" to calculate a lower bound "0.122 x 10⁻²" and adds "0.001" to "0.123" to calculate an upper bound "0.124 x 10⁻²". The arithmetic operation with such an interval including an exact value always provides guaranteed results.

The calculated upper and lower bounds are transmitted from the interval specifying section 13 to the ALU 14. The ALU 14 carries out arithmetic operations using the upper bound and the lower bound that are supplied from the interval specifying section 13, according to an instruction from the control section 16. The arithmetic operations to be performed by the ALU 14 may be, for example, numerical computation based on four rules. The operation result is supplied to the operation result selecting section 15.

The operation result selecting section 15 compares operation results from the ALU 14 with each other and selects an operation result that satisfies a predetermined condition. The operation result selecting section 15 writes the selected operation result in the data memory 12. For example, the operation result selecting section 15 is configured to select the highest value and the lowest value from the operation results to write them in the data memory 12.

The control section 16 directs the instruction memory 11 to receive instructions from the outside of the arithmetic processing unit 10. The control section 16 reads the instructions from the instruction memory 11 and distributes them to the interval specifying section 13, the ALU 14, and the operation result selecting section 15. In addition, the control section 16 directs the data memory 12 to receive floating point numbers from the outside of the arithmetic processing unit 10. The control section 16 also directs the data memory 12 to produce the operation results and the floating point numbers stored in it to the outside of the arithmetic processing unit 10.

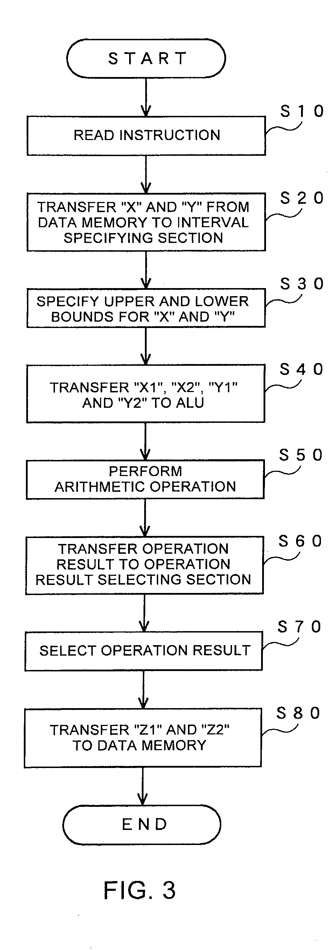

Operations of the above-mentioned arithmetic processing unit 10, in particular, arithmetic operations on floating point numbers, are described with reference to Figs. 3 to 7.

Fig. 3 is a view showing a processing flow of the above-mentioned arithmetic operation. For the arithmetic operations herein, it is assumed that the instruction memory 11 in the arithmetic processing unit 10 stores instructions to perform the arithmetic operations, and that the data memory 12 therein stores at least two rounded-off floating point numbers to be used for the subsequent arithmetic operations. The two floating point numbers to be used for the arithmetic operations are represented by "x" and "y", wherein "x < y" applies.

The control section 16 reads an instruction associated with the arithmetic operation that the control section 16 is going to perform, from the instruction memory 11. The control section 16 then transmits the instruction to the interval specifying section 13 (step S10). In response to the instruction from the control section 16, the interval specifying section 13 retrieves the two floating point numbers "x" and "y" to be used for the arithmetic operation, from the data memory 12 according to the instruction (step S20).

Then, the interval specifying section 13 specifies lower bounds "x1" and "y1" and upper bounds "x2" and "y2" for the floating point numbers "x" and "y" retrieved from the data memory 12 (step S30). For example, the interval specifying section 13 adds one to and subtracts one from the least significant digit of the mantissa of each of the floating point numbers "x" and "y". In this way, the interval specifying section 13 calculates the bounds "x1" "x2", "y1" and "y2". The interval specifying section 13 then supplies the calculated bounds "x1" "x2", "y1" and "y2" to the ALU 14 (step S40).

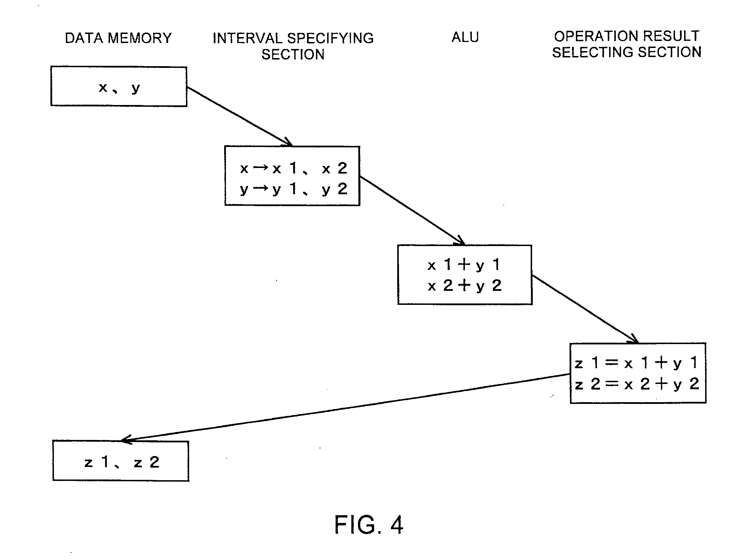

The control section 16 sends an instruction to the ALU 14 to direct the ALU 14 to perform the arithmetic operation. The ALU 14 performs the arithmetic operation on the bounds "x1" "x2", "y1" and "y2" supplied from the interval specifying section 13, according to the instruction (step S50). The operation results are transferred from the ALU 14 to the operation result selecting section 15 (step S60). The arithmetic operations that are performed by the ALU 14 are as shown in Figs. 4 to 7.

When the instruction indicates an addition operation, then the ALU 14 adds "x1" to "y1" (x1 + y1), and adds "x2" to "y2" (x2 + y2) (Fig. 4).

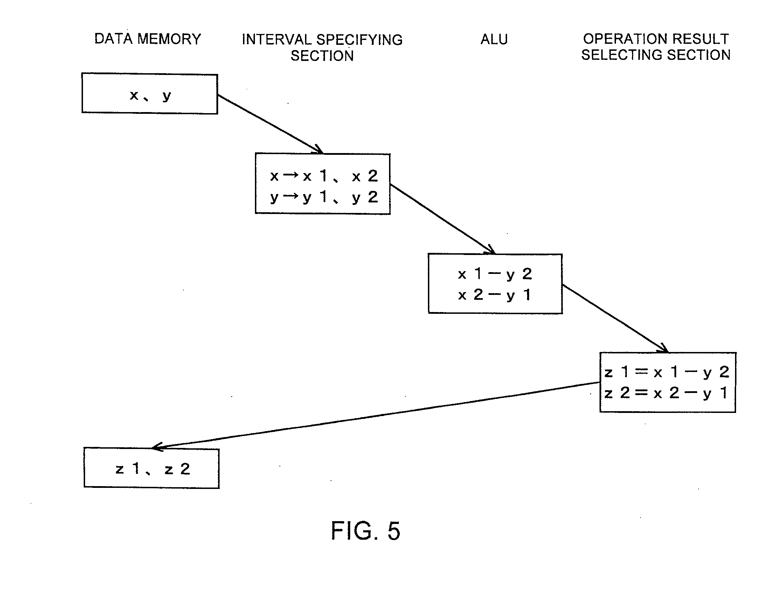

When the instruction indicates a subtraction operation, then the ALU 14 subtracts "y2" from "x1" (x1 - y2) and subtracts "y1" from "x2" (x2 - y1) (Fig. 5).

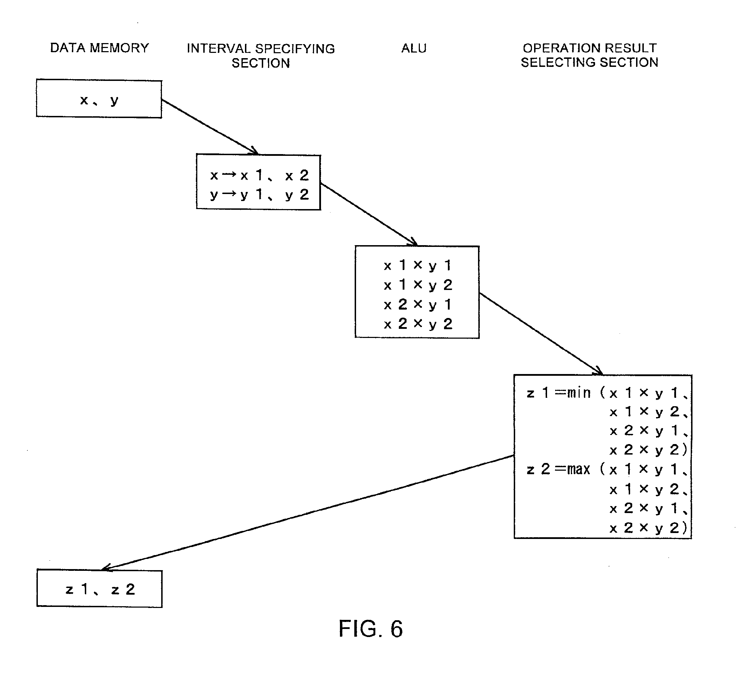

When the instruction indicates a multiplication operation, then the ALU 14 multiplies "x1" by "y1" (x1 x y1), multiplies "x1" by "y2" (x1 x y2), multiplies "x2" by "y1" (x2 x y1) and multiplies "x2" by "y2" (x2 x y2) (Fig. 6).

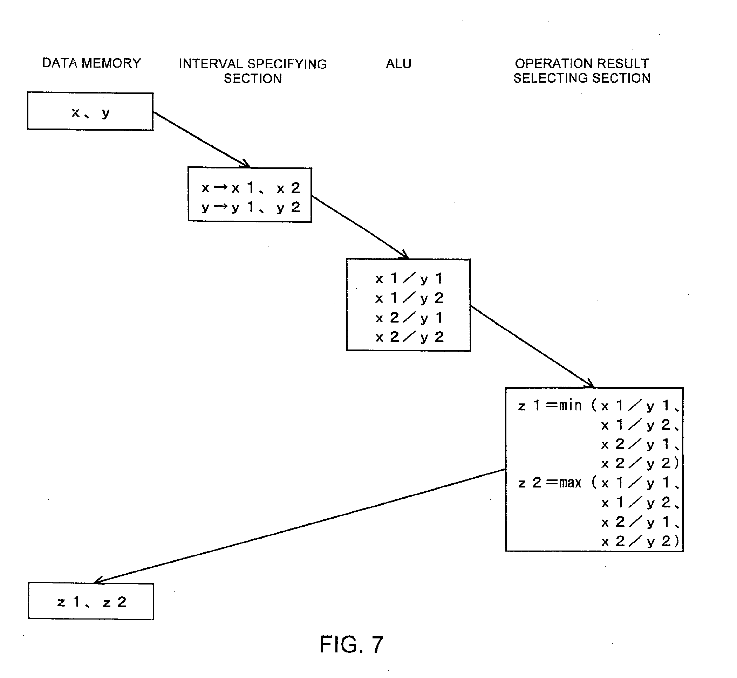

When the instruction indicates a division operation, then the ALU 14 divides "x1" by "y1" (x1/y1), divides "x1" by "y2" (x1/y2), divides "x2" by "y1" (x2/y1) and divides "x2" by "y2" (x2/y2) (Fig. 7).

Subsequently, the operation result selecting section 15 compares the operation results supplied from the ALU 14 according to the instruction from the control section 16 and selects only the operation result(s) satisfying a predetermined condition. The operation result selecting section 15 then writes the selected operation result(s) in the data memory 12 (steps S70 and S80). More specifically, the operation result selecting section 15 performs one of the following operations, depending on what is required by the instruction received from the control section 16.

When the instruction indicates an addition operation, then the operation result selecting section 15 uses "x1 + y1" and "x2 + y2" as operation results "z1" and "z2" and writes them in the data memory 12. The operation results "z1" (= x1 + y1) and "z2" (= x2 + y2) represent the lower bound and the upper bound, respectively, of the interval (Fig. 4).

When the instruction indicates a subtraction operation, then the operation result selecting section 15 writes the operation results "z1 (= x1 - y2) and "z2" (= x2 - y1) in the data memory 12 (Fig. 5).

When the instruction indicates a multiplication operation, then the operation result selecting section 15 compares the operation results "x1 x y1" "x1 x y2", "x2 xy1 " and "x2 x y2" with each other and selects the lowest value and the highest value. The operation result selecting section 15 designates the lowest value as "z1" and the highest value as "z2" and writes them in the data memory 12 (Fig. 6).

When the instruction indicates a division operation, then the operation result selecting section 15 compares the operation results "x1/y1", "x1/y2", "x2/y1", and "x2/y2" with each other and selects the lowest value and the highest value. The operation result selecting section 15 designates the lowest value as "z1" and the highest value "z2" and writes them in the data memory 12 (Fig. 7).

In this way, the operation results "z1" and "z2" can be obtained using a pair of floating point numbers "x" and "y". The operation result with the exact value associated with the floating point numbers "x" and "y" must lie in the interval between the lower bound specified by the operation result "z1" and the upper bound specified by the operation result "z2". The operation results "z1" and "z2" may be produced from the data memory 12 to the outside of the arithmetic processing unit 10 or may be used again for another arithmetic operation.

As apparent from the above, a hardware tool can be used to process the machine interval arithmetic. In the arithmetic processing unit 10 having the above-mentioned configuration and features, the interval specifying section 13 and the ALU 14 can be operated in parallel. More specifically, when the interval specifying section 13 and ALU 14 are operated continuously, the ALU 14 is allowed to perform arithmetic operations using the upper bounds and the lower bounds that have been obtained previously, in parallel to the calculation of the upper bounds and the lower bounds for the floating point numbers by the interval specifying section 13. This increases the entire operation speed.

The interval specifying section 13 makes it possible to calculate an upper bound and a lower bound for a received floating point number. This eliminates the necessity of reading upper bounds and lower bounds from the data memory 12 one after another when they become necessary. The ALU 14 can perform calculations using the upper bounds and the lower bounds specified by the interval specifying section 13 according to an instruction from the control section 16. Accordingly, a conventional routine of "specifying lower bounds -> computation -> specifying upper bounds -> computation" can be reduced to a routine of "specifying lower and upper bounds -> computation", increasing the speed of the entire operation.

As described above, the selection of the lowest and highest values is necessary for the multiplication and division operations in addition to the above simplified routine. However, the operation result selecting section 15 can select the lowest and highest values only by the comparison of operation results from the ALU 14 according to an instruction received. Therefore, the operation with guaranteed accuracy can be performed at a significantly higher speed as compared with the conventional procedures.

In addition, the guaranteed results can be achieved based on the hardware. This allows a software designer to develop a software tool for floating point numbers without considering the guaranteed accuracy. Software tools can be developed without expert knowledge and expertise and without a time consuming, labor intensive process. Consequently, the efficiency of development will be increased.

The interval specifying section 13 in the above-mentioned embodiment is configured to calculate upper bounds and lower bounds by adding one to and subtracting one from the least significant digit of the mantissa of floating point numbers. However, the present invention is not limited to such cases. The upper bound and the lower bound may be supplied from the outside with an input device. Alternatively, the input device may be used to designate the number (figure) to be added to and subtracted from the least significant digit of the mantissa of a floating point number.

The arithmetic processing unit 10 may be used for performing arithmetic operations on numerical values with errors, such as "100 ± 10". In such a case, the data memory 12 stores numerical values with errors that are supplied from the outside of the arithmetic processing unit 10 for the subsequent arithmetic operations. The numerical values with errors may be obtained among scattering values such as measurement results.

The interval specifying section 13 retrieves numerical values with errors to be used for arithmetic operations, from the data memory 12 and specifies an upper bound and a lower bound of an interval with errors. For example, the interval specifying section 13 calculates "100" plus "10" (100 + 10) and "100" minus "10" (100 - 10) when the numerical value with errors is designated as "100 ± 10". In this way, the interval specifying section 13 specifies the upper bound "110" and the lower bound "90". The ALU 14 performs arithmetic operations using these upper and lower bounds.

Thus, the arithmetic processing unit 10 can still be used, as is, for numerical values with errors.

As apparent from the above description, the present invention provides an arithmetic processing unit that is capable of performing arithmetic operations with guaranteed accuracy on the basis of a purpose-built hardware for guaranteed results.

## Claims

1. An arithmetic processing unit comprising:
data storage means (12) in which a plurality of floating point numbers are stored;
interval specifying means (13) adapted to retrieve two or more floating point numbers from said data storage means (12) to specify an upper bound and a lower bound between which an exact value lies for each of the retrieved two or more floating point numbers; and
arithmetic operation means (14) for performing a predetermined arithmetic operation using the upper bound and the lower bound that are specified by said interval specifying means (13) for each of the two or more floating point numbers,
said data storage means (12), said interval specifying means (13), and said arithmetic operation means (14) being achieved by hardware implementations.

2. The arithmetic processing unit as claimed in Claim 1, further comprising operation result selecting means (15) that compares operation results obtained by said arithmetic operation means (14) to select an operation result that satisfies a predetermined condition and writes the selected operation result in said data storage means (12).

3. The arithmetic processing unit as claimed in Claim 2, wherein said operation result selecting means (15) is configured to select an operation result with the highest value and an operation result with the lowest value.

4. The arithmetic processing unit as claimed in Claim 1, wherein said arithmetic operation means (14) is adapted to sum two upper bounds and sum two lower bounds when two floating point numbers are added to each other, the two upper bounds and the two lower bounds being obtained from corresponding two floating point numbers.

5. The arithmetic processing unit as claimed in Claim 1, wherein said arithmetic operation means (14) is adapted to subtract the lower bound obtained from the one floating point number from the upper bound obtained from the other floating point and subtract the upper bound obtained from the one floating point number from the lower bound obtained from the other floating point number, when one floating point number is subtracted from the other floating point number.

6. The arithmetic processing unit as claimed in Claim 2, wherein said arithmetic operation means (14) is adapted to do multiplication or division using one upper bound and the other upper bound and adapted to do multiplication or division using one lower bound and the other lower bound, the upper bound and the lower bound being obtained from the two floating point numbers, and adapted to do multiplication or division using the upper bound obtained from the one floating point number and the lower bound obtained from the other floating point number, and adapted to do multiplication or division using the lower bound obtained from the one floating point number and the upper bound obtained from the other floating point number, when two floating point number are multiplied or divided,
said operation result selecting means (15) being configured to select a multiplication result with the highest value and a multiplication result with the lowest value, or a division result with the highest value and a division result with the lowest value, out of four multiplication results or four division results obtained by said arithmetic operation means (14).

7. An arithmetic processing unit comprising:
instruction storage means (11) in which an instruction for directing a predetermined arithmetic operation is stored;
data storage means (12) in which a plurality of floating point numbers are stored;
interval specifying means (13) adapted to retrieve the instruction from said instruction storage means (11) and retrieve two or more floating point numbers from said data storage means (12) according to the instruction and specify an upper bound and a lower bound between which an exact value lies for each of the retrieved two or more floating point numbers;
arithmetic operation means (14) adapted to retrieve the instruction from said instruction storage means (11) and retrieve two or more upper bounds and two or more lower bounds that are specified by said interval specifying means (13) according to the instruction, said arithmetic operation means (14) being for performing the predetermined arithmetic operation designated by the retrieved predetermined instruction, using the retrieved two or more upper bounds and the retrieved two or more lower bounds; and
operation result selecting means (15) for selecting an operation result that satisfies a predetermined condition from the operation results obtained as a result of operations by said arithmetic operation means (14) to write the selected operation result in said data storage means (12),
said instruction storage means (11), said data storage means (12), said interval specifying means (13), and said arithmetic operation means (14) being achieved by hardware implementations.

8. The arithmetic processing unit as claimed in Claim 7, wherein said arithmetic operation means (14) is adapted to sum the upper bounds for the two floating point numbers and sum the lower bounds for the two floating point numbers, when the number of the floating point numbers that are retrieved by said interval specifying means (13) is equal to two and when the predetermined instruction is for directing addition,
said operation result selecting means (15) being configured to write two operation results obtained by said arithmetic operation means (14) in said data storage means (12).

9. The arithmetic processing unit as claimed in Claim 7, wherein said arithmetic operation means (14) is adapted to subtract the lower bound obtained from one floating point number from the upper bound obtained from the other floating point and subtract the upper bound obtained from the one floating point number from the lower bound obtained from the other floating point number, when the number of the floating point numbers retrieved by said interval specifying means (13) is equal to two and when the predetermined instruction is for directing subtraction of one floating point number from the other,
said operation result selecting means (15) being configured to write two operation results obtained by said arithmetic operation means (14) in said data storage means (12).

10. The arithmetic processing unit as claimed in Claim 7, wherein said arithmetic operation means (14) is adapted to do multiplication or division using one upper bound and the other upper bound and adapted to do multiplication or division using one lower bound and the other lower bound, the upper bound and the lower bound being obtained from the two floating point numbers, and adapted to do multiplication or division using the upper bound obtained from the one floating point number and the lower bound obtained from the other floating point number, and adapted to do multiplication or division using the upper bound obtained from the other floating point number and the lower bound obtained from the one floating point number, when the number of the floating point numbers retrieved by said interval specifying means (13) is equal to two and when the predetermined instruction is for directing multiplication or division,
said operation result selecting means (15) being configured to write, in said data storage means (12), a multiplication result with the highest value and a multiplication result with the lowest value, or a division result with the highest value and a division result with the lowest value, out of four multiplication results or four division results obtained by said arithmetic operation means (14).

11. The arithmetic processing unit as claimed in Claim 1, wherein said interval specifying means (13) is configured to calculate the upper bound by adding one to the least significant digit of the mantissa for each of the two or more floating point numbers, and calculate the lower bound by subtracting one from the least significant digit of the mantissa for each of the two or more floating point numbers.

12. The arithmetic processing unit as claimed in Claim 7, wherein said interval specifying means (13) is configured to calculate the upper bound by adding one to the least significant digit of the mantissa for each of the two or more floating point numbers, and calculate the lower bound by subtracting one from the least significant digit of the mantissa for each of the two or more floating point numbers.

13. The arithmetic processing unit as claimed in Claim 1, wherein said interval specifying means (13) is allowed to specify the upper bound and the lower bound for each floating point number from outside.

14. The arithmetic processing unit as claimed in Claim 7, wherein said interval specifying means (13) is allowed to specify the upper bound and the lower bound for each floating point number from outside.

15. An arithmetic processing unit comprising:
data storage means (12) in which a plurality of numerical values with errors are stored;
interval specifying means (13) adapted to retrieve two or more numerical values with errors from said data storage means (12) to specify an upper bound and a lower bound between which errors lie for each of the retrieved two or more numerical values with errors; and
arithmetic operation means (14) for performing a predetermined arithmetic operation using the upper bound and the lower bound for each of two or more numerical values with errors that are specified by said interval specifying means (13),
said data storage means (12), said interval specifying means (13), and said arithmetic operation means (14) being achieved by hardware implementations.

16. A semiconductor device comprising:
an instruction memory (11) in which an instruction for directing a predetermined arithmetic operation is stored;
a data memory (12) in which a plurality of floating point numbers are stored;
an interval specifying section (13) adapted to retrieve the instruction from said instruction memory (11) and retrieve two or more floating point numbers from said data memory (12) according to the instruction and specify an upper bound and a lower bound between which an exact value lies for each of the retrieved two or more floating point numbers;
arithmetic operation section (14) adapted to retrieve the instruction from said instruction memory (11) and retrieve two or more upper bounds and two or more lower bounds that are specified by said interval specifying section (13) according to the instruction, said arithmetic operation section (14) being for performing the predetermined arithmetic operation designated by the retrieved predetermined instruction, using the retrieved two or more upper bounds and the retrieved two or more lower bounds; and
operation result selecting section (15) for selecting an operation result with the highest value and an operation result with the lowest value, from the operation results obtained as a result of operations by said arithmetic operation section (14) to write the selected operation result in said data memory (12).
